# EUROPÄISCHE PATENTSCHRIFT

(11) **EP 1 570 324 B1**
(45) Veröffentlichungstag und Bekanntmachung des Hinweises auf die Patenterteilung: **25.02.2009**
(21) Anmeldenummer: 03812542.3
(22) Anmeldetag: 05.12.2003
(51) Int. Cl.: G05B 19/418

(54) **VERFAHREN FÜR EINE DYNAMISCHE AUTOMATISIERUNG MIT KOLLABORATIVEN ELEMENTEN UND LEITSYSTEM DAZU**
METHOD FOR DYNAMIC AUTOMATION USING COLLABORATIVE ELEMENTS, AND CONTROL SYSTEM THEREFOR
PROCEDE D'AUTOMATISATION DYNAMIQUE COMPORTANT DES ELEMENTS COLLABORATIFS ET SYSTEME DE COMMANDE CORRESPONDANT

(30) Priorität: 10.12.2002 CH 211602
(43) Veröffentlichungstag der Anmeldung: 07.09.2005
(73) Patentinhaber: LogObject AG, 8048 Zürich (CH)
(72) Erfinder: ROSSI, Roberto, CH-8424 Embrach (CH); WULLSCHLEGER, Felix, H., CH-8045 Zürich (CH)
(74) Vertreter: Becker, Konrad
(86) Internationale Anmeldenummer: PCT/CH2003/000803
(87) Internationale Veröffentlichungsnummer: WO 2004/053605

(56) Entgegenhaltungen:
- EP-A- 0 700 841
- US-A- 5 825 981
- PATENT ABSTRACTS OF JAPAN vol. 1998, no. 14, 31. Dezember 1998 (1998-12-31) & JP 10 244431 A (DENSO CORP), 14. September 1998 (1998-09-14)
- PATENT ABSTRACTS OF JAPAN vol. 1998, no. 09, 31. Juli 1998 (1998-07-31) & JP 10 101222 A (MAZDA MOTOR CORP), 21. April 1998 (1998-04-21)

## Beschreibung

Die vorliegende Erfindung betrifft ein Verfahren für eine dynamische Automatisierung mit kollaborativen Elementen gemäss Patentanspruch 1 und ein Leitsystem zur Durchführung des Verfahrens gemäss Patentanspruch 18.

Die Automatisierung von industriellen Prozessen, insbesondere von logistischen Prozessen, weist bis heute folgende Ausprägungen auf:
- Spezielle vollautomatische Anlagen: Dies sind Anlagen, die gewisse Prozesse vollautomatisch ausführen. In diesen Anlagen ist die Anwesenheiten von Personen nicht vorgesehen. Die Leistungsmerkmale dieser Maschinen sind gegeben und nur mit sehr viel Aufwand veränderbar. Beispiele solcher Anlagen sind Hochregallager, Sorter und im Allgemeinen Fördersysteme.
- Fertigungslinien: Diese entsprechen weitgehend der Arbeitsorganisation von Ford. Die Herstellung von Erzeugnissen industrieller Prozesse folgt fixen, definierten Routen. Auf diesen Routen sind fixe Positionen definiert, an welchen die einzelnen Arbeitsvorgänge ausgeführt werden. Diese Vorgänge können mit menschlicher Hilfe oder vollautomatisch, durch geeignete Anlagen, ausgeführt werden.

Beispiele dafür stellen die Leistungen folgender Anbieter dar:
Swisslog: (www.swisslog.com)
Siemens Dematic: Analog zu Swisslog (www.siemensdematic.com/corp/en/index.php)
AFT: (www.aft.de)

Ein weiteres Beispiel von Transportsystemen ist HELPMATE^{®}, the Trackless Robotic Courier (http://www.helpmate.com/products/helpmate.asp). Dieses Transportsystem ist in der Lage, Ware in Umgebungen zu verteilen, in welchen auch Menschen arbeiten. Die Aufgabe des Roboters in diesem Falle ist das Anfahren der vorgegebenen Positionen. Die eigentliche Verteilung der Ware nehmen dann die Menschen vor. Helpmate stellt nicht ein aktiv steuerndes Element eines industriellen Prozesses dar, sondern wartet passiv an der angefahrenen Position.

### Nachteile bekannter Systeme:

Der von automatischen Systemen belegte Raum ist nur für die automatischen Komponenten vorbereitet. Die Anwesenheit von Menschen wird also stark behindert und in jedem Fall wird dadurch eine Störung des Systems verursacht. Die heutigen automatischen Systeme sehen definierte Zonen vor, in denen Mensch und Maschine interagieren können. Diese Zonen sind statisch und es ist in keinem Fall möglich, dass sich Personen und Maschinen gleichzeitig unabhängig und autonom bewegen können. Der Raum für fahrerlose Transportsysteme (FTS) ist z.B. so vorbereitet, dass die Fahrbahnen für die Bewegungen der FTS reserviert sind. Somit wird das Wahrnehmen von Hindernissen jeglicher Art (inklusive die Anwesenheit einer Person) als Störung verarbeitet. Dies erweist sich als nachteilig, weil dadurch in der Regel Unterbrüche bei den Arbeitsabläufen, resp. Totzeiten entstehen.

Nach JP 10101222 ist ein Verfahren für eine Kosten optimierte Lagerbewirtschaftung bekannt, bei dem ein mobiler Roboter entlang einer definierten Wegstrecke am Teilelager vorbeigeführt wird. Der Arbeiter trifft den Roboter, auf dessen Bildschirm die die Instruktionen für das Laden der Teile dargestellt sind. Der Ladevorgang wird durch optische Anzeigen am Lagerort und an der Ablagestelle auf dem Roboter unterstützt.

Nach US-Patent Nr. 5,825,981 ist ein Robotersystem für eine Fertigungslinie bekannt, bei dem mehrere Roboter zur Erledigung einer Aufgabe vorhanden sind. Diese Roboter werden von einem sogenannten 'Software-Roboter', einem Leitsystem geführt und überwacht. Die Vorgabedaten der Aufgabe werden vom Leitsystem mindestens einem der Roboter zur Abwicklung der Aufgabe übertragen. Die Verfügbarkeit von mehreren Robotern ermöglicht eine effiziente Abwicklung bei Ausfällen von Robotern unter der Vermeidung von Totzeiten. Eine Interaktion mit Menschen ist bei diesem Robotersystem nicht vorgesehen.

Im Patentdokument EP0,700,841 wird ein Verfahren zur Verwaltung eines Lagersystems beschrieben, bei dem mehrere mobile Einheiten über eine drahtlose Kommunikationsverbindung mit einer Leitzentrale zum Empfang von Aufträgen für durchzuführende Arbeiten in Verbindung stehen. Eine laufende Standortbestimmung der mobilen Einheiten erfolgt mittels eines Satalliten-Navigationssystems (GPS). Der jeweilige Einsatz der mobilen Einheiten wird dadurch optimiert gesteuert. Eine Interaktion mit Menschen ist bei diesem Verfahren ebenfalls nicht vorgesehen.

Aufgabe der vorliegenden Erfindung ist es, ein Verfahren für eine dynamische Automatisierung vorzuschlagen, beim dem die angeführten Nachteile entfallen und das sich durch seine Leistungsfähigkeit auszeichnet.
Eine weitere Aufgabe besteht darin ein Leitsystem zur Durchführung des Verfahrens anzugeben.

Die Aufgabe wird gelöst durch ein Verfahren gemäss Patentanspruch 1 und durch ein Leitsystem gemäss Patentanspruch 18.

Das erfindungsgemässe Verfahren beruht auf einer Kollaboration zwischen Menschen und Maschinen, und zwar mit den folgenden Charakteristika:
- Der Arbeitsraum ist jederzeit sowohl für Menschen als auch für mobile Roboter zugänglich;
- der Entstehungsort von Erzeugnissen aus industriellen Prozessen ist der mobile Roboter, welcher autonom und frei im Arbeitsraum navigiert;
- die Ausführungszone wird dynamisch bestimmt. Dort treffen Roboter, die für die Ausführung nötigen Ressourcen sowie die Menschen zusammen. Die Menschen bewegen sich dabei autonom;
- die Kooperation wird am Ausführungsbereich vom mobilen Roboter initiiert und die entsprechenden Informationen werden in der lokalen Umgebung vom Roboter aktiv kommuniziert.

Das Verfahren und das dazugehörige Leitsystem werden im Folgenden beschrieben. Es zeigen:
Fig. 1 Schematische Darstellung eines Arbeitsschrittes
Fig. 2 Schematische Darstellung der Architektur einer dynamischen Automatisierung Fig. 3 Transaktionsdiagramm eines Ablaufes einer dynamischen Automatisierung

Kern der Erfindung ist ein Verfahren, das kollaborative Elemente, wie im Wesentlichen Menschen, resp. Personen und mobile Roboter, aber auch Automaten vorsieht, die zusammen kooperieren, um gestellte Aufgaben, bzw. Auftragsabwicklungen möglichst effizient zu erfüllen.
Das Grundprinzip beruht auf der Tatsache, dass es eine Arbeitsteilung zwischen Mensch und mobilen Robotern gibt, wobei sich diese beiden kollaborativen Elemente autonom im Arbeitsraum, resp. im Raum bewegen. Ein solches Konzept findet heute vor allem in der Kooperation zwischen Menschen statt und zum Teil auch zwischen Automaten, nicht jedoch zwischen Mensch und Maschine.
Bei der erfindungsgemässen Aufgabenteilung zwischen Mensch und Roboter wird berücksichtigt, dass jedes dieser kollaborativen Elemente genau jenen Teil eines Arbeitsvorganges ausführt, welcher der Kollaboration bezüglich Effizienz, Flexibilität, Qualität und Leistung am Meisten nützt.

In der vorliegenden Erfindung werden folgende Begriffe definiert:
01. Ein **Raum** ist der Arbeitsraum, im dem die dynamische Automatisierung realisiert wird.
02. Ein **kollaboratives Element** ist ein Bestandteil eines Arbeitsschrittes.
03. Ein **kollaboratives Element I. Art, KE(I)** ist ein Roboter, in der Regel als Transportsystem ausgebildet, welches mobil, autonom und frei navigieren kann. Der Roboter ist der Ort, wo ein Erzeugnis eines Auftrages entsteht. Zudem ist der Roboter in der Lage, statische Ressourcen zu transportieren.
04. Ein **kollaboratives Element II. Art, KE(II)** ist ein Mensch, bzw. eine Person; der Mensch kann sich im Raum frei und autonom bewegen er stellt in diesem Verfahren eine mobile Ressource dar.
05. Ein **kollaboratives Element III. Art, KE(III)** ist ein Automat, bzw. eine Maschine, die für einen Arbeitsschritt eingesetzt wird und ist in der Regel nicht transportierbar, d.h. fix installiert.
06. Eine **Ausführungszone** ist eine Zone des Raumes, in der kollaborative Elemente zusammentreffen um einen Arbeitsschritt abzuwickeln.
07. Ein **Arbeitsschritt** ist das Eintreffen von mindestens einem kollaborativen Element I. Art und von mindestens einem kollaborativen Element II. Art und/oder mindestens einem kollaborativen Element III. Art in einer Ausführungszone, um eine Auftragsposition abzuwickeln.
08. Ein **Arbeitsvorgang** ist die Menge aller Arbeitsschritte, die notwendig sind, um einen Auftrag abzuwickeln.
09. **Kommunikationsmedien** sind die Gesamtheit der Kommunikationsmöglichkeiten zwischen KE(I), KE(II) und KE(III).
10. Ein **Teilerzeugnis** ist das Produkt eines Arbeitsschrittes.
11. Ein **Erzeugnis** ist eine Summe von Teilerzeugnissen und das Produkt eines Auftrages, wobei ein Auftrag auch mehrere Erzeugnisse umfassen kann.
12. Ein **aktueller Zustand** des kollaborativen Systems sind die aktuellen Standorte aller KE(I) und KE(II), der Status (frei, belegt, Störung, Pause usw.) aller KE's, der aktuelle Bestand und Standort aller Waren im Raum und der Ausführungsgrad aller bekannten Aufträge und Auftragspositionen.
13. Ein **Auftrag** beschreibt eine logische und logistische Einheit, welche bereitzustellen ist. Der Auftrag ist versehen mit einem Termin (Zeit, Datum): Bis wann muss die Einheit bereit gestellt sein. Der Auftrag enthält Informationen darüber, wer diese Einheit zu empfangen hat. Die Ausführung eines Auftrages erzeugt eine Menge von Erzeugnissen.
14. Eine **Auftragsposition** ist Teil eines Auftrages und beschreibt einen Arbeitsschritt für die Bereitstellung, bzw. die Herstellung einer Einheit. Sie enthält die Information, welche Ressourcen benötigt werden, um den Arbeitsschritt auszuführen: Ware und/oder Einrichtungen. In der Beschreibung der Auftragsposition wird das Resultat dieses Arbeitsschrittes genau festgehalten.
   Jeder Auftragsposition ist eine Sequenznummer zugeordnet, welche beschreibt, wann innerhalb eines Auftrages ein Arbeitsschritt ausgeführt werden muss: Welche Auftragspositionen zwingend vor der aktuellen Auftragsposition auszuführen sind; welche Auftragspositionen zwingend nach dieser Auftragsposition auszuführen sind; welche Auftragspositionen wahlweise vor oder nach dieserAuftragsposition ausgeführt werden können. Die Sequenznummern aller Auftragspositionen eines Auftrags bilden somit mathematisch eine Halbordnung.
15. **Statische Ressourcen** sind Ressourcen, welche bei der Ausführung eines Auftrages gebraucht werden und deren Standort im Raum die Ausführungszone bestimmen. Sie können mit Hilfe von KE(I) transportiert werden, jedoch nicht während der Ausführung eines Arbeitsschrittes.
16. **Mobile Ressourcen** sind Ressourcen, welche sich bei der Ausführung eines Auftrages autonom bewegen oder von autonomen mobilen Robotern transportiert werden. Diese Ressourcen werden somit autonom zur Ausführungszone unmittelbar vor der Ausführung eines Arbeitsschrittes bewegt.
17. **Fixe Ressourcen** sind Ressourcen, welche nicht transportiert werden können (z.B. ein Spritzroboter, ein Lager).
18. **Ware** ist eine Ressource, welche für die Ausführung einer Auftragsposition verbraucht wird: Nach der Ausführung ist diese Ressource für keinen weiteren Auftrag verfügbar.
19. **Einrichtung** ist eine Ressource, welche nicht verbraucht wird: Nach der Ausführung einer Auftragsposition ist sie für weitere Aufträge verfügbar (z.B. ein Werkzeug).
20. **Dynamisch:** Jede Zuordnung erfolgt zum spätest möglichen Zeitpunkt, bzw. Termin unter zusätzlicher Berücksichtigung des aktuellen Zustandes des kollaborativen Systems.

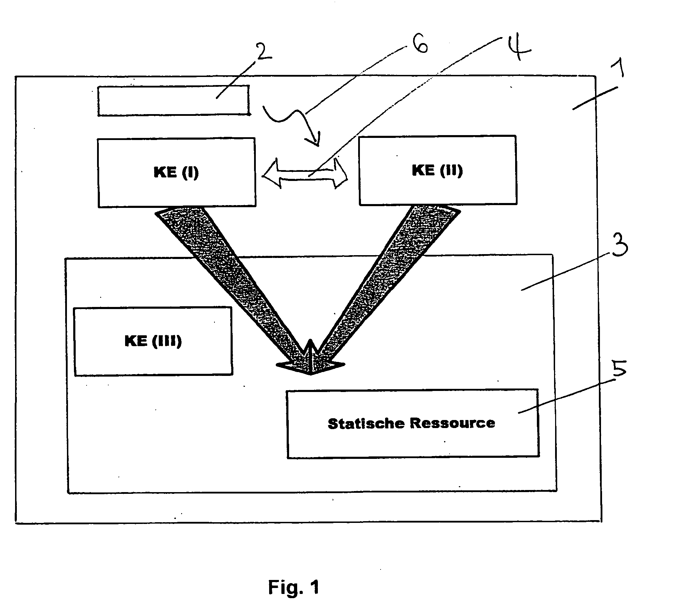

Fig. 1 zeigt eine schematische Darstellung eines Arbeitsschrittes. In einem Raum 1 befindet sich ein kollaboratives Element I. Art KE(I), ein mobiler Roboter, der mittels eines Leitsystems 2 in eine Ausführungszone 3 geführt, bzw. gesteuert oder beordert wird. Das Leitsystem 2 befindet sich in der Regel im Raum 1 und ist mit einer bidirektionalen Anlage zur drahtlosen Übermittlung 6 aller Informationen, Anweisungen und Rückmeldungen ausgerüstet, was mit einem Pfeil angedeutet ist. Vorteilhafterweise kann sich das Leitsystem aber auch auf dem KE(I), dem mobilen Roboter, befinden. In diesem Fall kann die Übermittlung zum KE(I) mindestens teilweise auch per Draht erfolgen. Die Ausführungszone 3 befindet sich im Raum und ist ein Bereich, bzw. eine Zone dieses Raumes, in der kollaborative Elemente zusammentreffen, um einen Arbeitsschritt abzuwickeln, bzw. die im Arbeitsschritt gestellte Aufgabe zu erfüllen. Kollaborative Element I. Art KE(I) kann sich im Raum frei und autonom bewegen. Ausnahme bilden ausgesparte Flächen mit Hindernissen, wie etwa Regale, Lagerschränke, Barrieren und dergleichen, aber auch Hindernisse wie Personen. 'Frei' bewegen heisst, dass das KE(I) sich bewegt, bzw. navigiert 'wo es will'; 'autonom' heisst, dass das KE(I) sich 'selbständig' bewegt, wie im weiteren erläutert wird. Vom Leitsystem angewiesen und geführt bewegt sich das KE(I) der Ausführungszone entgegen. Beim Eintreffen in der Ausführungszone oder vorteilhafterweise bereits vorgängig, z.B. auf dem Weg zur Ausführungszone, wird vom KE(I) mit Anweisungen vom und über das Leitsystem über Kommunikationsmedien 4 ein kollaboratives Element II. Art, KE(II), ein Mensch, bzw. eine Person angefordert, die sich nun in die Ausführungszone begibt, um dann nach dem Eintreffen weitere Weisungen entgegenzunehmen. Sobald KE(I) und KE(II) in der Ausführungszone eingetroffen sind, erhält KE(II) die Anweisung, den teilerzeugenden Schritt unter Einbezug von statischen Ressourcen 5 zu vollziehen, welche bei der Ausführung des Arbeitsschrittes gebraucht werden. Eine solche Anweisung kann z.B. so lauten, nämlich 'zwei Pack Schrauben in eine Versandeinheit zu legen', wobei sich die Versandeinheit auf dem KE(I), dem mobilen Roboter befindet. Die Ausführung dieser Anweisung wird vom KE(I) überwacht. Nach einer fehlerfreien Abwicklung werden alle kollaborativen Elemente freigestellt für weitere Aufgaben. Mit dieser Freistellung ist der Arbeitsschritt abgeschlossen. Das Teilerzeugnis dieses Arbeitsschrittes befindet sich auf dem KE(I) und ist auf diesem gebildet worden. Somit ist das KE(I) der Entstehungsort des Teilerzeugnisses.
Der Arbeitsschritt kann auch ein kollaboratives Element III. Art, KE(III), einen Automaten, bzw. eine Maschine, umfassen, die sich auch in der Ausführungszone befindet. Ein KE(III) ist in der Regel nicht transportierbar, d.h. fix installiert, wie z.B. Etikettiermaschine, Wickelmaschine, Spritzroboter.

Da sich der Mensch und die mobilen Roboter autonom bewegen, setzt das erfindungsgemässe Verfahren folgende Anforderungen, bzw. Voraussetzungen voraus:
Raum: Im gleichen Raum müssen sich Menschen und mobile Roboter sicher bewegen können. Der Raum muss so vorbereitet sein, dass
   - die Roboter selbständig navigieren und sich autonom orientieren können;
   - die Roboter sowohl Menschen als auch andere Roboter eindeutig identifizieren können;
   - die freie Bewegung der Menschen jederzeit erlaubt ist;
   - den Robotern die verschiedenen Standorte der Menschen im Raum zu jeder Zeit bekannt sind.
Diese Aufgaben sind alle dem Leitsystem überbunden. Navigation: Die autonomen mobilen Roboter müssen in der Lage sein, im Raum so zu navigieren, dass die Anwesenheit von Menschen mit berücksichtigt wird und nicht zu Störungen führt, welche dann von Menschen manuell zu beheben sind: Die Anwesenheit eines Menschen kann zwar aus räumlichen Gründen das Anhalten eines mobilen Roboters verursachen. Sobald sich aber der Mensch so bewegt, dass das Weiterfahren möglich ist, ist der Roboter in der Lage, seine Navigation autonom wieder aufzunehmen.
Der mobile Roboter "trifft" im Raum Menschen, um mit deren Hilfe, bzw. Kollaboration eine gemeinsame Aufgabe, bzw. einen Arbeitsschritt auszuführen. Deshalb ist es notwendig, dass der Roboter einer bestimmten Person autonom folgen kann. Die Navigation muss so gestaltet werden, dass der mobile Roboter allen Hindernissen ausweichen kann, insbesondere all jenen Personen, welche momentan nicht mit dem Roboter kooperieren.
Damit unterscheidet sich das erfindungsgemässe Verfahren von bekannten Systemen: Die meisten Fahrzeuge, die sich in automatischen Systemen bewegen, bewegen sich entweder auf Schienen (Regalbediengeräte, Hängebahnen) oder auf fixen Bahnen. Dies gilt für führerlose Transportsysteme (FTS) inklusive Laser Guided AGV (Laser Guided Vehictes): Die Bahn ist in der entsprechenden Software fest definiert. Die Anwesenheit von Hindernissen führt zu Störungen. Führerlose Transportsysteme sind nicht in der Lage, Menschen autonom zu folgen.

Kommunikation: Die Kollaboration zwischen Mensch und Roboter erfolgt im Raum, und nicht an einem vordefinierten, fixen Standort. Der Ort der Kollaboration (Ausführungszone) wird aufgrund des aktuellen Zustandes des gesamten Arbeitsvorganges dynamisch berechnet.
Da sich Personen unabhängig vom Roboter bewegen können, ist es notwendig, dass zwischen den Robotern und den Personen eine geeignete Kommunikationsinfrastruktur vorhanden ist. Diese unterstützt das rechtzeitige Zusammentreffen der beiden kollaborativen Elemente (Mensch / Roboter). Nach dem Zusammentreffen von Person und Roboter findet während des Arbeitsschrittes wiederum eine intensive Kommunikation, bzw. Interaktion statt. Dabei erhält die Person vom Roboter einerseits die notwendigen Informationen, um den Arbeitsschritt auszuführen. Andererseits überwacht der Roboter auch den Arbeitsschritt und informiert die Person sofort, falls bei dessen Ausführung ein Fehler auftritt.
Diese beiden Kömmunikationsflüsse sind so zu gestalten, dass sie möglichst effizient und intuitiv für den Menschen erfolgen, der Informationsfluss jedoch gleichzeitig auch rechtzeitig und mit ausreichender Genauigkeit und Sicherheit geliefert wird. Diese Anforderung setzt voraus, dass möglichst viele Kommunikationsmedien parallel verwendet werden, wie z.B. Sprache, optische Signale, akustische Signale, Video, Körpersprache.
Damit unterscheidet sich das erfindungsgemässe Verfahren wiederum von bekannten Systemen: Diese weisen die erwähnten Anforderungen an die Kommunikation mit den Menschen nicht auf. Hauptgrund: Die Interaktion zwischen Mensch und Maschine erfolgt jeweils an Standorten im Raum, welche fix sind, und zwar relativ zur Maschine.

Im bisher beschriebenen Verfahren bilden die kollaborativen Elemente die Basis für die Kooperation zwischen Menschen und mobilen Robotern. Es wurde postuliert, dass sich autonom bewegende Menschen mit sich autonom bewegenden Robotern an bestimmten Standorten treffen und zusammen einen Arbeitsschritt ausführen. Sobald dieser gemeinsame Arbeitsschritt abgeschlossen ist, sind sowohl der Mensch als auch der mobile Roboter wieder für andere Aufgaben disponibel, bzw. freigestellt: Der Mensch kann einen weiteren Arbeitsschritt, bzw. eine weitere Auftragsposition eines anderen Arbeitsvorganges, bzw. Auftrages ausführen und der mobile Roboter kann sich für einen nächsten Schritt des gleichen Arbeitsvorganges vorbereiten.

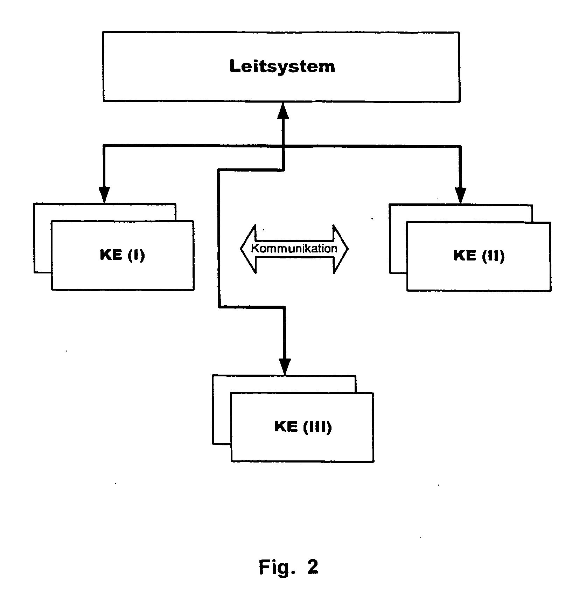

Fig. 2 zeigt eine schematische Darstellung der Architektur einer dynamischen Automatisierung.
Im Allgemeinen besteht das kollaborative System aus einer Menge kollaborativer Elemente I. Art, KE(I), d.h. von autonomen Robotern und aus einer Menge kollaborativer Elemente II. Art, KE(II), d.h. autonomer Menschen, welche gemeinsam mehrere Arbeitsvorgänge in einem Raum ausführen. Dabei kann optional eine Menge kollaborativer Elemente III. Art, KE(III), d.h. Automaten mitwirken, bzw. beteiligt sein oder werden. Alle kollaborativen Elemente stehen mit dem Leitsystem bidirektional in Verbindung. Zwischen den KE(I) und den KE(II) wird der Informationsfluss mittels den Kommunikationsmedien sichergestellt. Auf Systemebene entstehen somit die folgenden neuen Aufgabenstellungen:
- Welcher Arbeitsvorgang muss als nächstes von welchem Roboter ausgeführt werden;
- weichen Arbeitsschritt muss eine Person als nächstes ausführen, d.h. wo wird welche Person, für was und wann gebraucht.

Die Lösung dieser zwei Aufgabenstellungen erfolgt unter Berücksichtigung der Leistungsmaximierung des gesamten kollaborativen Systems (inkl. der KE(III)) mit folgenden Kriterien:
- Maximierung der Anzahl Arbeitsvorgänge, welche vom System pro Zeiteinheit ausgeführt werden können;
- Minimierung der Durchlaufzeiten der einzelnen Arbeitsvorgänge;
- gleichmässige Auslastung aller beteiligten Personen.

Daraus entstehen Koordinationsaufgaben zwischen Robotern und Menschen, welche durch technische Vorrichtungen, bzw. Leitsysteme und organisatorische Massnahmen aktiv unterstützt werden.

### Hostsystem.

Das Hostsystem bestimmt, welche Aufträge bis zu welchem spätesten Zeitpunkt abgearbeitet werden müssen. Das Hostsystem ist zuständig dafür, dass alle notwendigen Materialen und Ressourcen rechtzeitig beschafft werden und somit die zugeordneten, bzw. eingelasteten Aufträge auch termingerecht erledigt werden können.

### Leitsystem.

Das Leitsystem bestimmt die Segmentierung der einzelnen Arbeitsvorgänge. Das Leitsystem koordiniert alle mobilen Roboter, Menschen und Automaten (Elemente des kollaborativen Systems), so dass alle Arbeitsvorgänge optimal ausgeführt werden können.
Das Leitsystem kennt die exakten Standorte der einzelnen Wareneinheiten im Raum sowie auch die Standorte von jedem Menschen und von jedem Roboter. Das Leitsystem kennt zudem auch den aktuellen Zustand von jedem Automaten.
Das Leitsystem bestimmt, welcher Arbeitsvorgang welchem Roboter zugeordnet wird. Das Leitsystem bestimmt, welches die nächsten Aktivitäten der verschiedenen Personen sind, bzw. jeder einzelnen Person ist.

### KE(I), Roboter.

Der Roboter kommuniziert ständig mit dem Leitsystem. Einerseits, um die Informationen über den zugeteilten Arbeitsvorgang zu empfangen, andererseits aber auch, um dem Leitsystem fortwährend den momentanen Vorschritt der zugeteilten Arbeitsvorgänge zurückzumelden. Gleichzeitig meldet der Roboter dem Leitsystem auch fortlaufend seinen Zustand und seinen Standort im Raum.

### KE(II), Mensch.

Der Mensch ist ausgerüstet mit Kommunikationsvorrichtungen, so dass die Kommunikation zwischen Mensch und Leitsystem im Wesentlichen ununterbrochen, bzw. kontinuierlich stattfindet. Die gleiche Kommunikationsvorrichtungen ist so ausgestattet, dass der Standort jeder einzelnen Person lückenlos und ständig vom Leitsystem ermittelt werden kann.

### KE(III), Automat.

Analog zum Roboter, ausser bezüglich des Standortes, da dieser fix sein kann.

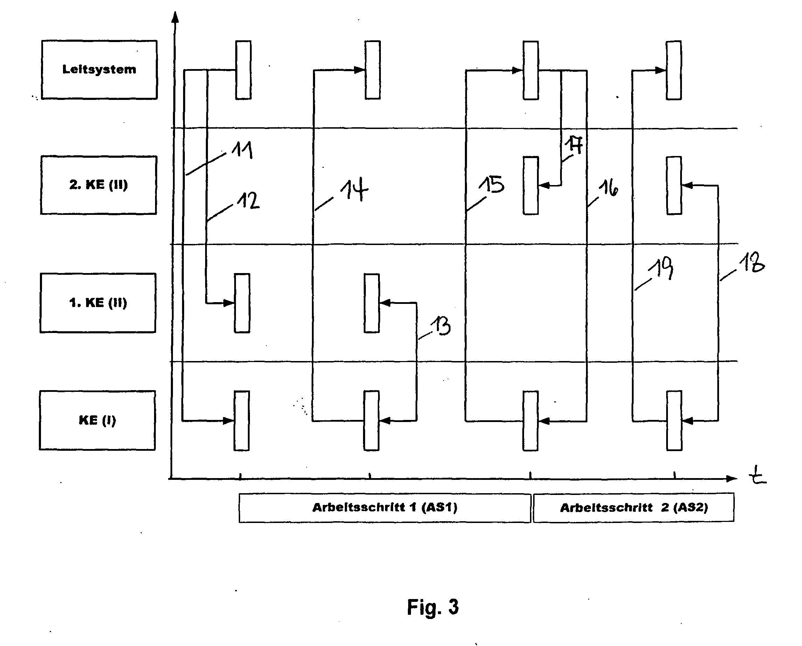

Fig. 3 zeigt ein Transaktionsdiagramm eines Ablaufes einer dynamischen Automatisierung.
Ein erster und ein zweiter Arbeitsschritt AS1 und AS2 sind zeitlich hintereinander auf einer Zeitachse dargestellt. Auf einer Ordinate sind aufgelistet: Das Leitsystem, eine 1. KE(II), eine 2. KE(II) und ein KE(I). Im ersten Arbeitsschritt ergehen vom Leitsystem die Befehle 11, 12 an KE(I) und 1. KE(II) zur Bewegung in eine erste Ausführungszone. Als nächstes im Arbeitsschritt AS1 findet der zwischen KE(I) und 1. KE(II) notwendige Informationsfluss 13 zur Erledigung des Arbeitschrittes AS1 statt, wobei vom Leitsystem der Befehl 14 zum Start erfolgt. Abschluss des Arbeitsschrittes AS1 bildet die Überwachung durch KE(I) mit einer Rückmeldung 15 an das Leitsystem. Im zweiten Arbeitsschritt ergehen vom Leitsystem die Befehle 16, 17 an KE(I) und 2. KE(II) zur Bewegung in eine zweite Ausführungszone. Als nächstes im Arbeitsschritt AS2 findet der zwischen KE(I) und 2. KE(II) notwendige Informationsfluss 18 zur Erledigung des Arbeitschrittes AS2 statt, wobei vom Leitsystem der Befehl 19 zum Start erfolgt. Abschluss des Arbeitsschrittes AS2 bildet die Überwachung durch KE(I) mit einer Rückmeldung an das Leitsystem (nicht mehr dargestellt).

### Bestimmung des Standortes der statischen Ressourcen im Raum.

Aufgrund von Hochrechungen, Voraussagen oder Voranmeldungen von Aufträgen bestimmt das Leitsystem die Standorte aller statischen Ressourcen im Raum. Die Standorte und die Menge der einzelnen Ressourcen wird als eine gewichtete, nicht lineare Kombination folgender Kriterien festgelegt:
- Optimierung der Wege, welche die Personen zurücklegen müssen, um die verschiedenen Ausführungszonen zu erreichen;
- Optimierung der Wege, welche die übrigen mobilen Ressourcen zurücklegen müssen, um die Ausführungszonen zu erreichen;
- Reduzierung der Nachfüllvorgänge jener Waren, welche während der Ausführung der entsprechenden Aufträge gebraucht werden;
- Reduzierung der Kollisionswahrscheinlichkeit aller mobiler Roboter;
- Erhöhung des Ausführungsparallelismus: Falls die gleiche Ware an mehreren Standorten verteilt vorliegt, können parallel alle Aufträge, welche diese Ware benötigen, ausgeführt werden.
Der Standort der statischen Ressourcen wird dynamisch und ständig berechnet: Wenn ein Standort frei wird, wird dessen Neubelegung gemäss obiger Kriterien und zuzüglich des aktuellen Zustandes des kollaborativen Systems neu berechnet.

Der Standort der statischen Ressourcen wird am Anfang einer Planungsperiode neu berechnet.

### Dynamische Zuordnung (Scheduling).

Die Zuordnung, bzw. Einlastung der Aufträge auf die mobilen Roboter erfolgt dynamisch. Die Auswahl des nächsten Auftrages wird bestimmt durch:
- Reihenfolge der Aufträge: Diese wird ermittelt aufgrund des im Auftrag enthaltenen, spätest möglichen Ausführungstermins;
- Abhängigkeit zu anderen Aufträgen, falls die Ausführung anderer Aufträge eine Vorbedingung für die Ausführung eines Auftrages ist;
- Verfügbarkeit der Ressourcen, welche für den Auftrag notwendig sind;
- Standort der Roboter relativ zu den notwendigen, fixen Ressourcen.

Damit wird bestimmt, welches Erzeugnis des Auftrages auf welchem mobilen Roboter bereitgestellt, bzw. hergestellt werden muss. Damit wird die Menge der Auftragspositionen bestimmt, welche ausgeführt werden müssen, um das Erzeugnis bereitzustellen, bzw. herzustellen. Die Reihenfolge der Ausführung der Auftragsposition ist zu diesem Zeitpunkt noch nicht bestimmt.

### Dynamische Bestimmung der nächsten Auftragsposition.

Die Festlegung, welche Auftragsposition ausgeführt werden muss, erfolgt:
- nach der Zuordnung, bzw. Einlastung eines Erzeugnisses auf einem mobilen Roboter;
- ummittelbar nachdem eine Auftragsposition ausgeführt, bzw. abgeschlossen worden ist.

Die Menge der möglichen Auftragspositionen eines Erzeugnisses wird durch die Sequenznummern der noch auszuführenden Auftragspositionen bestimmt. Die Auswahl aus dieser Menge unterliegt folgenden Kriterien:
- Aktuelle Verfügbarkeit der mobilen und statischen Ressourcen;
- Minimierung der Wege, welche die benötigten mobilen Ressourcen zurücklegen müssen (aufgrund aktueller Standorte). Falls die benötigte, fixe Ressource an verschiedenen Standorten verfügbar ist, wird unter Anwendung dieses Kriteriums auch die Ausführungszone festgelegt (lese 'statische Ressource');
- gleichmässige Auslastung der Personen;
- gleichmässige Auslastung aller Ressourcen; aller KE(I) und KE(III).

### Eintreffen von allen mobilen Ressourcen in der Ausführungszone.

Das Leitsystem ist zuständig für das rechtzeitige Eintreffen aller mobilen Ressourcen in der Ausführungszone. Um dies zu ermöglichen, wird die nächste Auftragsposition und deren Ausführungszone während der Ausführung der aktuellen Auftragsposition vorbereitet, aber noch nicht definitiv festgelegt. Damit werden die vorhandenen freien (auftragsfreien), mobilen Ressourcen zur "in Vorbereitung"-Ausführungszone dirigiert. Bei der Vorbereitung werden die gleichen Kriterien angewendet, wie bei der Bestimmung der nächsten Auftragsposition. Dabei gilt folgende Grundsatzregel: Es wird nicht der aktuelle Zustand aller benötigten Ressourcen beachtet, sondern der wahrscheinliche Zustand zum Zeitpunkt der Ausführung. Sobald eine vorbereitete, mobile Ressource frei wird, wird diese sofort zur "in Vorbereitung"-Ausführungszone geführt.

Im weiteren wird ein Ausführungsbeispiel für eine dynamische Automatisierung in der Lagerlogistik beschrieben. Die Beschreibung wird hier zur Vereinfachung der Darstellung (d.h. sie ist nicht abschliessend zu verstehen) auf einen Logistikprozess beschränkt, nämlich auf die Kommissionierung.

### Kommissionieren mit kollaborativen Elementen.

Im Folgenden werden die Definitionen für ein logistisches Umfeld übersetzt. Es bedeuten:
1. Ein **Auftrag** in der Kommissionierung entspricht einem Versandauftrag. Dieser ist mit einem Liefertermin und einer Lieferadresse versehen.
2. Die **Auftragsposition** eines Versandauftrages beschreibt, welche Ware mit welchen Eigenschaften in welcher Menge ausgeliefert werden muss. Der Arbeitsschritt beinhaltet in diesem Fall, die Ware so zu verpacken, dass sie für den Versand vorbereitet ist. Auftragspositionen können eine Sequenznummer aufweisen. Diese beschreibt die Logik für die Stapelung der Ware: Schwere Ware wird zuerst kommissioniert.
3. **Statische Ressourcen** sind in diesem Fall Waren, die in fixen Ressourcen gelagert sind.
4. **Mobile Ressourcen** sind mobile Roboter.
5. **Fixe Ressourcen** sind Regale, Lagerplätze, Etikettierstationen, Hochregallager usw..
6. **Ware** sind die zu kommissionierenden Produkte.
7. **Einrichtung:** Wird selten verwendet in diesem Prozess. Beispiele davon sind: Preisauszeichungsmaschinen.
8. **Erzeugnis** ist die Versandeinheit.

### Bestimmung des Lagerortes der Ware im Kommissionierlager.

Der Lagerort der Ware im Lager wird aufgrund von Hochrechnungen, Voraussagen und Voranmeldungen von Versandaufträgen bestimmt. Die gleiche Ware kann auch an mehreren Standorten gelagert werden. Der Lagerort und die Menge der zu lagernden Ware wird durch eine nichtlineare Kombination der folgenden Kriterien bestimmt:
- Gleichmässige Verteilung der zukünftigen Picking-Vorgänge im gesamten Raum;
- Reduzierung der Nachfüllvorgänge während der Kommissionierung;
- Parallelismus: Ware die sehr oft gebraucht wird, wird auf mehrere Lagerorte verteilt.

Die Bestimmung der Lagerorte erfolgt dynamisch, und zwar auch während der Kommissionierung und beim Nachfüllen.

### Dynamisches Zuordnen (Scheduling).

Die Zuordnung, bzw. die Einlastung der Aufträge auf die mobilen Roboter erfolgt dynamisch. Die Auswahl des nächsten Auftrages wird bestimmt durch:
- Die Reihenfolge der Aufträge: Diese wird aufgrund der Liefertermine, die im Auftrag enthalten sind, resp. der entsprechenden Prioritäten ermittelt;
- die Verfügbarkeit der Ware im Kommissionierlager, welche für den Auftrag notwendig sind;
- den Standort der Roboter relativ zu den notwendigen, fixen Ressourcen.

Mit diesem Schritt wird bestimmt, welche Versandeinheit des Auftrages auf welchem mobilen Roboter bereit-, bzw. hergestellt werden muss. Damit wird die Menge der Auftragspositionen bestimmt, welche ausgeführt werden muss, um die Versandeinheit herzustellen. Die Reihenfolge der Ausführung ist zu diesem Zeitpunkt noch nicht bestimmt.

Mit Packmusterlogik ist es möglich, die Menge der Versandeinheit eines Auftrages im Voraus zu bestimmen: Damit können alle Versandeinheiten eines Auftrages parallel zugeordnet, bzw. eingelastet werden.

### Dynamische Bestimmung der nächsten Auftragsposition.

Welche Auftragsposition ausgeführt werden muss, wird wie folgt festgelegt:
- Nach der Zuordnung (Einlastung) einer Versandeinheit auf einem mobilen Roboter;
- ummittelbar nachdem eine Auftragsposition ausgeführt worden ist.

Die Menge der möglichen Auftragspositionen einer Versandeinheit wird durch die Sequenz der noch zu kommissionierenden Auftragspositionen bestimmt.

Die Auswahl aus dieser Menge unterliegt den folgenden Kriterien:
- Aktuelle Verfügbarkeit der Personen und der Ware;
- Minimierung der Wege, welche die benötigten Personen und die mobilen Roboter zurücklegen müssen (aufgrund der entsprechenden aktuellen Standorte). Falls die benötigte Ware an verschiedenen Standorten verfügbar ist, wird auch unter Anwendung dieses Kriteriums festgelegt, wo gepickt wird;
- gleichmässige Auslastung der Personen;
- gleichmässige Auslastung aller Ressourcen.

### Eintreffen der notwendigen mobilen Ressourcen am Pickingort.

Das System ist sowohl für das rechtzeitige Zusammentreffen (am Pickingort) des mobilen Roboters mit der Versandeinheit als auch mit der Person, welche die Ware greifen muss, zuständig. Um dies zu ermöglichen, wird die nächste Auftragsposition und deren Ware (Pickingort) während der Ausführung des aktuellen Standortes vorbereitet, aber noch nicht definitiv festgelegt. Es wird geprüft, ob die Person, welche den aktuellen Standort kommissioniert, auch für die nächste Auftragsposition geeignet ist, und zwar aufgrund folgender Kriterien:
- Kürzester Weg relativ zu allen pendenten Auftragspositionen: Die gleiche Person führt den nächsten Arbeitsvorgang dieses Auftrages nur dann aus, wenn dies die kürzeste Standortverschiebung der Person verursacht;
- Wartezeiten anderer Personen: Sollte es Personen geben, welche sehr lange auf eine Arbeit, bzw. auf einen Arbeitsvorgang warten, dann werden zuerst diese Personen herbeigezogen.

Damit werden die anwesenden, freien Personen zum "in Vorbereitung"-Pickingort dirigiert. Bei der Vorbereitung werden die gleichen Kriterien angewendet, wie bei der Bestimmung der nächsten Auftragsposition.

Dabei gilt folgende Grundsatzregel: Es wird nicht der aktuelle Zustand aller benötigten Ressourcen beachtet, sondern der wahrscheinliche Zustand zum Zeitpunkt der Ausführung. Sobald eine vorbereitete mobile Ressource frei wird, wird diese sofort zur "in Vorbereitung"-Ausführungszone geführt.

### Organisatorische Einschränkungen.

Dieses Verfahren kann durch sinnvolle, organisatorische Massnahmen eingeschränkt werden. Diese sind unter Umständen notwendig, um die Arbeitsorganisation für die beteiligten Personen verständlich zu gestalten.
Weitere Massnahmen können aufgrund der spezifischen, wiederkehrenden, topologischen Eigenschaften des Arbeitsraumes (hier das Lager) eingeführt werden.

### Pickingzone.

In der Regel arbeitet eine Person in einer definierten Lagerzone. Diese Zone wird aufgrund der Topologie des Lagers definiert: Eine Person arbeitet in der Regel in einigen wenigen Lagergängen (Gänge zwischen Regalen) und verlässt diese Zone nur, wenn aufgrund von Fehlplanungen die Pickingvorgänge im Lager sehr ungleichmässig stattfinden.

### Bildung von Zügen mobiler Roboter.

Es wird vorausgesetzt, dass die mobilen Roboter sich in einem Gang nur in einer Fahrtrichtung bewegen. Die zu fahrende Fahrtrichtung wird genau dann festgelegt, wann ein erster Roboter tatsächlich bei einem von Robotern unbelegten, freien Gang eintrifft. Diese Fahrtrichtung bleibt fix, solange sich noch ein mobiler Roboter im Lagergang befindet. Jeder weitere Roboter trifft nun diesen 'belegten' Gang mit vorbestimmter Fahrtrichtung an, was zu einer Bildung eines Zuges von zwei oder mehreren mobilen Robotern führt. Es wird vorausgesetzt, dass sich mobile Roboter in einem Lagergang nicht überholen können. Diese Voraussetzung basiert auf bekannten, verbreiteten Lagertopologien.

Da normalerweise ein Lager lange Lagergänge aufweist, bilden sich automatisch Züge mobiler Roboter.
Die Anwendung des oben definierten Algorithmus für die Bestimmung der nächsten Tätigkeit einer Person kann folgende Ausprägungen, resp. Merkmale aufweisen:
- Falls sich in einem Lagergang ein Zug gebildet hat, bewegt sich die Person immer in der entgegengesetzten Fahrtrichtung (zum Roboter);
- sobald eine Person einen Standort an einem Roboter abgearbeitet hat, bewegt sie sich zum nächsten Roboter, der auf eine Kommissionierung wartet;
- falls der erste Roboter am gleichen Standort auf eine weitere Kommissionierung wartet, dann bleibt die Person einfach stehen;
- die Person führt die nächste Auftragsposition aus.

In der Annahme, dass zwei benachbarte Lagergänge von zwei verschiedenen Personen bedient werden, und dass die Fahrtrichtung des Roboters in einem dieser Lagergänge entgegen gesetzt zur Fahrtrichtung des Roboters im anderen Lagergang ist, ergibt sich durch diese Fahrtrichtungen ein Karussell, ein sogenanntes 'kollaboratives Kommissionierungskarussell':
- Die Roboter fahren zum Beispiel im Uhrzeigersinn;
- die zwei Personen bewegen sich im Gegenuhrzeigersinn.

Falls in diesen Lagergängen mehr als zwei Personen gebraucht werden, können diese jederzeit in dieses Karussell eingespannt werden.

## Patentansprüche

1. Verfahren für eine dynamische Automatisierung, bei dem in einem Raum (1) mit Ressourcen (5) zur Abwicklung mindestens eines Arbeitsschrittes, resp. einer Auftragsposition mobile Roboter und Menschen mittels eines Leitsvstems (2) in eine Ausführungszone (3) gesteuert werden, mit dem Leitsystem kommunizieren und von diesem zum Vollzug des Arbeitsschrittes angewiesen werden,
**dadurch gekennzeichnet,**
**dass** in einem Raum (1) mit Ressourcen (5) zur Abwicklung mindestens eines Arbeitsschrittes, resp. einer Auftragsposition mindestens ein kollaboratives Element I. Art (KE(I)), ein mobiler, frei navigierender Roboter, mittels eines Leitsystems (2) in eine Ausführungszone (3) gesteuert wird, wobei das kollaborative Element I. Art mit mindestens einem kollaborativen Element II. Art (KE(II)), einem Menschen, kommuniziert,
**dass** das kollaborative Element II. Art mittels des gleichen Leitsystems (2) in die Ausführungszone (3) gesteuert wird, dass die Ausführungszone aufgrund des aktuellen Zustandes eines gesamten Arbeitsvorganges dynamisch berechnet wird,
**dass** nach dem Eintreffen der kollaborativen Elemente in der Ausführungszone das kollaborative Element II. Art vom kollaborativen Element I. Art über Kommunikationsmedien (4) angewiesen wird, den teilerzeugnisbüdenden Schritt zu vollziehen, wobei der Vollzug vom kollaborativen Element I. Art überwacht wird, dass beim Vollzug ein Teilerzeugnis auf dem kollaborativen Element I. Art als Entstehungsort gebildet wird, und dass nach dem Vollzug alle kollaborativen Elemente für den nächsten Arbeitsschritt freigestellt werden.

2. Verfahren nach Anspruch 1, **dadurch gekennzeichnet, dass** das kollaborative Element I. Art zusätzlich mit mindestens einem kollaborativen Element III. Art (KE(III)), einer Maschine, kommuniziert.

3. Verfahren nach Anspruch 1 oder 2, **dadurch gekennzeichnet, dass** als Ressourcen (5) statische, mobile und/oder fixe Ressourcen verwendet werden.

4. Verfahren nach Anspruch 3, **dadurch gekennzeichnet, dass** die Wahl der Ausführungszone (3) in Abhängigkeit von den für den Arbeitsschritt erforderlichen statischen und mobilen Ressourcen getroffen wird.

5. Verfahren nach einem der Ansprüche 1 - 4, **dadurch gekennzeichnet, dass** durch eine Folge von mindestens zwei Arbeitsschritten ein Arbeitsvorgang gebildet und dadurch der Auftrag dargestellt wird.

6. Verfahren nach Anspruch 5, **dadurch gekennzeichnet, dass** mindestens zwei Arbeitsvorgänge parallel ausgeführt werden, wobei vom Leitsystem (2) bestimmt wird, welche Reihenfolge von Arbeitsvorgängen mit welchen kollaborativen Elementen I. Art ausgeführt werden und weicher Arbeitsschritt vom mindestens einen kollaborativen Element II. Art und/oder III. Art als nächstes ausgeführt wird, und dass dadurch eine Leistungsmaximierung der Gesamtheit aller kollaborativen Elemente erzielt wird.

7. Verfahren nach Anspruch 6, **dadurch gekennzeichnet, dass** die Leistungsmaximierung durch die Kriterien - der Maximierung der Anzahl Arbeitsvorgänge, die pro Zeiteinheit ausgeführt werden, - der Minimierung aller Durchlaufzeiten der einzelnen Arbeitsvorgänge, und - der gleichmässigen Auslastung aller kollaborativen Elemente II. Art erzielt wird.

8. Verfahren nach einem der Ansprüche 1 - 7, **dadurch gekennzeichnet, dass** die kollaborativen Elemente mit dem Leitsystem (2) mittels Kommunikationsmedien (4) bidirektional und vorzugsweise kontinuierlich kommunizieren.

9. Verfahren nach einem der Ansprüche 1 - 8, **dadurch gekennzeichnet, dass** vom Leitsystem (2) die Standorte aller kollaborativen Elemente laufend ermittelt werden und dadurch jederzeit aktuell bekannt sind.

10. Verfahren nach einem der Ansprüche 1 - 9, **dadurch gekennzeichnet, dass** der nächste Arbeitsvorgang, der nächste Arbeitsschritt und die Verteilung der Ressourcen im Raum dynamisch vom Leitsystem (2) ermittelt werden, wobei jede Zuordnung zum spätest möglichen Zeitpunkt unter zusätzlicher Berücksichtigung des aktuellen Zustandes des kollaborativen Systems erfolgt.

11. Verfahren nach einem der Ansprüche 3 - 10, **dadurch gekennzeichnet, dass** die statischen Ressourcen im Raum so verteilt sind, dass die Arbeitsvorgänge sowohl in der Zeit als auch im Raum möglichst gleichmässig verteilt werden.

12. Verfahren nach einem der Ansprüche 1 - 11, **dadurch gekennzeichnet, dass** zur Berechnung ein wahrscheinlicher Zustand zum Zeitpunkt der Ausführung verwendet wird.

13. Verfahren nach einem der Ansprüche 1 - 12, **dadurch gekennzeichnet, dass** den kollaborativen Elementen II. Art unterschiedliche Teilräume des Raumes (1), insbesondere Lagerzonen, zugeordnet werden.

14. Verfahren nach Anspruch 13, **dadurch gekennzeichnet, dass** die kollaborativen Elemente I. Art in einem Teilraum sich nur in einer Fahrtrichtung bewegen, wobei die zu fahrende Fahrtrichtung genau dann festgelegt wird, wenn ein erstes kollaboratives Element I. Art im Teilraum eintrifft, dass diese Fahrtrichtung fix bleibt, solange sich noch ein kollaboratives Element I. Art im Teilraum befindet und dass sich jedes weitere kollaborative Element I. Art im so belegten Teilraum mit vorbestimmter Fahrtrichtung bewegt, was zur Bildung eines Zuges von mindestens zwei kollaborativen Elementen I. Art führt.

15. Verfahren nach Anspruch 13, **dadurch gekennzeichnet, dass** die kollaborativen Elemente I. Art in zwei benachbarten Teilräumen sich in entgegengesetzter Fahrtrichtung bewegen, wo sie von mindestens zwei verschiedenen kollaborativen Elementen II. Art bedient werden, dass durch die Fahrtrichtungen ein Karussell gebildet wird, in dem sich die kollaborativen Elemente I. Art und II. Art in entgegengesetzten Richtungen bewegen.

16. Anwendung des Verfahrens nach einem der Ansprüche 1 - 12 in der Logistik.

17. Anwendung des Verfahrens nach einem der Ansprüche 1 - 15 in der Lagerlogistik, insbesondere in der Kommissionierung.

18. Leitsystem zur Durchführung des Verfahrens nach einem der Ansprüche 1 - 15, **dadurch gekennzeichnet, dass** eine Segmentierung der Arbeitsvorgänge und eine Koordination aller kollaborativen Elemente vorgesehen ist, wodurch alle Arbeitsvorgänge optimal ausgeführt werden.

19. Leitsystem nach Anspruch 18, **dadurch gekennzeichnet, dass** es Kommunikationsmedien aufweist, über welche die Kenntnis der Standorte aller kollaborativen Elemente jederzeit aktuell vorliegt.

20. Leitsystem nach Anspruch 18 oder 19, **dadurch gekennzeichnet, dass** die Kommunikationsmedien bidirektional und vorzugsweise kontinuierlich in Betrieb sind.

21. Leitsystem nach einem der Ansprüche 18 - 20, **dadurch gekennzeichnet, dass** die Bestimmung des nächsten Arbeitsvorganges, des nächsten Arbeitsschrittes und die Verteilung der Ressourcen im Raum dynamisch vorgesehen ist, wobei jede Zuordnung zum spätest möglichen Zeitpunkt unter zusätzlicher Berücksichtigung des aktuellen Zustandes des kollaborativen Systems erfolgt.

22. Leitsystem nach einem der Ansprüche 18 - 21, **dadurch gekennzeichnet, dass** zur Berechnung ein wahrscheinlicher Zustand zum Zeitpunkt der Ausführung vorgesehen ist.

## Claims

1. Dynamic automation procedure by means of which mobile robots and people are steered into a performance zone (3) by a guidance system (2) in a room (1) with resources (5) to perform at least one step in the work process or to process one order item; the mobile robots communicate with the guidance system and are directed by it in how to complete the step in the work process, with the characteristic
that at least one collaborative element of the first type (KE(1)), a mobile, freely navigating robot, is steered into a performance zone (3) by a guidance system (2) in a room (1) with resources (5) to perform at least one step in the work process or to process one order item, in the course of which the collaborative element of the first type communicates with at least one collaborative element of the second type (KE (2)), a person,
that the collaborative element of the second type is directed by the same guidance system (2) into the performance zone (3),
that the performance zone is calculated dynamically based on the current status of an entire work process,
that, after the arrival of the collaborative elements in the performance zone, the collaborative element of the second type is directed by the collaborative element of the first type by means of communication media (4) to complete the step which creates the partial product, with the completion of the step being monitored by the collaborative element of the first type to ensure that in the course of the performance a partial product is created on the collaborative element of the first type as a place of generation, and
that after the completion of the step all collaborative elements are released for the next step in the work process.

2. Procedure in accordance with Claim 1, with the characteristic that the collaborative element of the first type communicates additionnally with at least one collaborative element of the third type (KE(3)), a machine.

3. Procedure in accordance with Claim 1 or 2, with the characteristic that resources (5) consist of either static, mobile or fixed resources.

4. Procedure in accordance with Claim 3, with the characteristic that the selection of the performance zone (3) is made based on the static and mobile resources necessary for the step in the work process to be performed.

5. Procedure in accordance with one of the Claims 1-4, with the characteristic that by means of a sequence of at least two steps, a work process is formed and thereby a job is constituted.

6. Procedure in accordance with Claim 5, with the characteristic that at least two work processes can be executed at the same time, with the guidance system (2) determining which sequence of work processes are performed with which collaborative elements of the first type, and which step in the work process is carried out next by at least one collaborative element of the second and/or third type, and that a maximum performance by all collaborative elements is thus achieved.

7. Procedure in accordance with Claim 6, with the characteristic that the maximization of performance is achieved by means of the criteria - the maximizing of the number of work processes that can be performed per unit of time - the minimization of all operational times for the individual work processes, and - the steady and uniform use of all collaborative elements of the second type.

8. Procedure in accordance with one of the Claims 1-7, with the characteristic that the collaborative elements constantly communicate with the guidance system (2) by means of communication media (4) in a bidirectional and preferably contiuous manner.

9. Procedure in accordance with one of the Claims 1-8, with the characteristic that the locations of all collaborative elements are continually determined by the guidance system (2) and thereby are known at all times in an actual manner.

10. Procedure in accordance with one of the Claims 1-9, with the characteristic that the next work process, the next step and the distribution of resources within the room are determined by the guidance system (2) in a dynamic manner, with each position being determined at the latest possible time and with the current state being taken into account as well.

11. Procedure in accordance with one of the Claims 3-10, with the characteristic that the static resources are distributed throughout the room in such a way as to make it possible for the work processes to be carried out as steadily and evenly as possible in both time and space.

12. Procedure in accordance with one of the Claims 1-11, with the characteristic that a probable location at the time of performance is used in the calculation.

13. Procedure in accordance with one of the claims 1-12, with the characteristic that the collaborative elements of the second type are assigned to different subdivisions of the room (1), especially storage zones.

14. Procedure in accordance with Claim 13, with the characteristic that the collaborative elements of the first type in a room subdivision move only in one direction, with this direction being determined exactly at the point at which the first collaborative element of the first type arrives in the room subdivision, that this direction remains fixed as long as a collaborative element of the first type remains in the room subdivision, and that each additional collaborative element of the first type moves in this occupied room subdivision in a previously determined direction, which results in a train of at least two collaborative elements of the first type.

15. Procedure in accordance with Claim 13, with the characteristic that the collaborative elements of the first type move in two opposite directions in two neighbouring room subdivisions, where they are operated by at least two different collaborative elements of the second type, that the directions result in the formation of a roundabout in which the collaborative elements of the first and second types move in opposite directions.

16. Application of the procedure in logistics in accordance with one of the Claims 1-12.

17. Application of the procedure in storage logistics, especially picking, in accordance with the Claims 1-5.

18. Guidance system intended for the execution of the procedure in accordance with one of the Claims 1-15, with the characteristic that a segmentation of the work processes and the coordination of all collaborative elements is planned, by which means all work processes will be optimally carried out.

19. Guidance system in accordance with Claim 18, with the characteristic that it comrises communication media which are used to determine the current location of all collaborative elements at all times in an actual manner.

20. Guidance system in accordance with Claim 18 or 19, with the characteristic that the communication media are bidirectionally and preferably continuously operated.

21. Guidance system in accordance with one of the Claims 18-20, with the characteristic that the determination of the next work process, of the next work step and the distribution of resources in the room is planned dynamically, with each position being determined at the latest possible time and with the current state of the collaborative system being taken into account as well.

22. Guidance system in accordance with one of the Claims 18-21, with the characteristic that a probable location at the time of performance is used in the calculation.

## Revendications

1. Procédé pour une automatisation dynamique dans lequel des robots mobiles et des personnes sont dirigés au moyen d'un système de guidage (2) dans une zone de réalisation (3) dans un espace (1) avec des ressources (5) pour le déroulement d'au moins une étape de travail, respectivement d'une position de commande, communiquent avec le système de guidage et qui sont instruits par celui pour l'exécution de l'étape du travail, **caractérisé en ce qu'** au moins un élément collaborateur du premier type (KE (I)), étant un robot mobile et naviguant librement, est dirigé au moyen d'un système de guidage (2) dans une zone de réalisation (3) dans un espace (1) avec des ressources (5) pour le déroulement d'au moins une étape de travail, respectivement d'une position de commande, l'élément collaborateur du premier type communiquant avec au moins un élément collaborateur du second type (KE (II)), étant une personne,
**en ce que** l'élément collaborateur du second type est dirigé au moyen du même système de guidage (2) dans la zone de réalisation (3),
**en ce que** la zone de réalisation est calculée en vertu de l'état actuel d'une opération de travail complète,
**en ce que**, après l'entrée des éléments collaborateurs dans la zone de réalisation, l'élément collaborateur du second type reçoit des instructions de l'élément collaborateur du premier type par des moyens de communication (4) pour exécuter l'étape formant le produit partiel, l'exécution étant contrôlée par l'élément collaborateur du premier type, **en ce que**, lors de l'exécution, un produit partiel est formé sur l'élément collaborateur du premier type comme lieu de formation, et
**en ce que**, après l'exécution, tous les éléments collaborateurs sont libérés pour la prochaine étape de travail.

2. Procédé selon la revendication 1, **caractérisé en ce que** l'élément collaborateur du premier type communique en supplément avec au moins un élément collaborateur du troisième type (KE)(III)), étant une machine.

3. Procédé selon la revendication 1 ou 2, **caractérisé en ce que** des ressources statiques mobiles et /ou fixes sont utilisées comme ressources (5).

4. Procédé selon la revendication 3, **caractérisé en ce que** le choix de la zone de réalisation (3) est pris en fonction des ressources statiques et mobiles nécessaires pour l'étape de travail.

5. Procédé selon l'une quelconque des revendications 1 à 4, **caractérisé en ce qu'**une opération de travail est formée par une succession d'au moins deux étapes de travail et la commande est représentée de cette façon.

6. Procédé selon la revendication 5, **caractérisé en ce qu'**au moins deux opérations de travail sont exécutées en parallèle, le système de guidage (2) déterminant dans quel ordre de succession des opérations de travail sont exécutées avec quels éléments collaborateurs du premier type et quelle étape de travail est exécutée par au moins un élément collaborateur du second type et/ou du troisième type comme prochain élément et **en ce qu'**ainsi une maximisation du rendement de la totalité de tous les éléments collaborateurs est obtenue.

7. Procédé selon la revendication 6, **caractérisé en ce que** la maximisation du rendement est obtenue par les critères suivants : la maximisation du nombre d'opérations de travail qui sont exécutées par unité de temps, la minimisation de tous les temps de passage des différentes opérations de travail et la charge uniforme de tous les éléments collaborateurs du second type.

8. Procédé selon l'une quelconque des revendications 1 à 7, **caractérisé en ce que** les éléments collaborateurs communiquent avec le système de guidage (2) par des moyens de communication (4) de façon bidirectionnelle et de préférence de façon continue.

9. Procédé selon l'une quelconque des revendications 1 à 8, **caractérisé en ce que** les emplacements de tous les éléments collaborateurs sont déterminés en permanence par le système de guidage (2) et sont connus ainsi à tout moment de façon actualisée.

10. Procédé selon l'une quelconque des revendications 1 à 9, **caractérisé en ce que** la prochaine opération de travail, la prochaine étape de travail et la répartition des ressources dans l'espace sont déterminées de façon dynamique par le système de guidage (2), chaque attribution s'effectuant à l'instant le plus tardif possible en prenant en compte en supplément l'état actuel du système collaborateur.

11. Procédé selon l'une quelconque des revendications 3 à 10, **caractérisé en ce que** les ressources statiques sont réparties dans l'espace de telle sorte que les opérations de travail sont réparties de la façon la plus uniforme possible aussi bien dans le temps que dans l'espace.

12. Procédé selon l'une quelconque des revendications 1 à 11, **caractérisé en ce qu'**un état probable au moment de l'exécution est utilisé pour le calcul.

13. Procédé selon l'une quelconque des revendications 1 à 12, **caractérisé en ce que** différents espaces partiels de l'espace (1), en particulier des zones de stockage, sont attribués aux éléments collaborateurs du second type.

14. Procédé selon la revendication 13, **caractérisé en ce que** les éléments collaborateurs du premier type se déplacent dans un espace partiel uniquement dans un sens de marche, le sens de marche à respecter étant défini de façon précise dans le cas où un premier élément collaborateur du premier type arrive dans l'espace partiel, **en ce que** ce sens de marche reste fixe aussi longtemps qu'un élément collaborateur du premier type se trouve encore dans l'espace partiel et **en ce que** tout autre élément collaborateur du premier type se déplace dans l'espace partiel ainsi occupé avec le sens de marche prédéfini, ce qui entraîne la formation d'un train d'au moins deux éléments collaborateurs du premier type.

15. Procédé selon la revendication 13, **caractérisé en ce que** les éléments collaborateurs du premier type se déplacent dans deux espaces partiels voisins dans le sens de marche opposé, où ils sont servis par au moins deux éléments collaborateurs différents du second type, **en ce qu'**un manège, dans lequel les éléments collaborateurs du premier et du second type se déplacent dans des directions opposées, est formé par les sens de marche.

16. Utilisation du procédé selon l'une quelconque des revendications 1 à 12 dans la logistique.

17. Utilisation du procédé selon l'une quelconque des revendications 1 à 15 dans la logistique de stockage, en particulier dans la préparation des commandes.

18. Système de guidage pour la mise en oeuvre du procédé selon l'une quelconque des revendications 1 à 15, **caractérisé en ce qu'**une segmentation des opérations de travail et une coordination de tous les éléments collaborateurs sont prévues, de sorte que toutes les opérations de travail sont exécutées de façon optimale.

19. Système de guidage selon la revendication 18, **caractérisé en ce qu'**il présente des moyens de communication par lesquels la connaissance des emplacements de tous les éléments collaborateurs est à tout moment actualisée.

20. Système de guidage selon la revendication 18 ou 19, **caractérisé en ce que** les moyens de communication sont bidirectionnels et de préférence continuellement en service.

21. Système de guidage selon l'une quelconque des revendications 18 à 20, **caractérisé en ce que** la détermination de la prochaine opération de travail, de la prochaine étape de travail et la répartition des ressources dans l'espace est prévue de façon dynamique, chaque attribution s'effectuant à l'instant le plus tardif possible en tenant compte en supplément de l'état actuel du système collaborateur.

22. Système de guidage selon l'une quelconque des revendications 18 à 21, **caractérisé en ce qu'**un état probable au moment de l'exécution pour le calcul est prévu.
